# EUROPEAN PATENT APPLICATION

(11) **EP 3 229 125 A1**
(43) Date of publication of application: **11.10.2017**
(21) Application number: 17158083.0
(22) Date of filing: 27.02.2017
(51) Int. Cl.: G06F 3/0488

(54) **ELECTRONIC DEVICE AND METHOD OF RECEIVING USER INPUT THEREOF**

(30) Priority: 04.04.2016 KR 20160041169
(71) Applicant: Samsung Electronics Co., Ltd., Gyeonggi-do 16677 (KR)
(72) Inventor: KIM, Byungchul, 16677 Gyeonggi-do, (KR); KIM, Seonghun, 16677 Gyeonggi-do, (KR); KIM, Jungsoo, 16677 Gyeonggi-do, (KR); HA, Sangsu, 16677 Gyeonggi-do, (KR)
(74) Representative: HGF Limited

(57) **Abstract**

A method of receiving various user inputs and performing corresponding operations and an electronic device adapted to the method are provided. The electronic device includes an accessory, a display including at least one sensor, and at least one processor. The at least one processor measures at least one of a voltage, a current, and a capacitance, created in response to a touch input applied to the accessory, using the at least one sensor. The processor operates in a first input mode if at least one of the measured quantities satisfies a first condition, and in a second input mode if at least one of the measured quantities satisfies a second condition. The electronic device according to various embodiments is capable of controlling an application, based on the levels of pressure applied to the accessory.

## Description

### TECHNICAL FIELD

The present disclosure relates to a method of receiving user inputs and an electronic device adapted to the method. More particularly, the present disclosure relates to a method of receiving various user inputs and performing operations corresponding to the user inputs, and an electronic device adapted to the method.

### BACKGROUND

Various types of displays are developed and used for electronic devices, such as smartphones, tablet personal computers (tablet PCs), portable multimedia players (PMPs), personal digital assistants (PDAs), laptop PCs, wearable devices, etc.

In recent years, technology has been developed to implement different functions on a display, depending on levels of pressure of a touch applied to the display.

In order to detect levels of pressure of a touch applied to a display and implements different functions according to the detected levels of pressure, techniques of the related art require touch panels to use a separate panel for detecting pressure.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of receiving touches via an accessory and performing operations corresponding to the input touches, and an electronic device adapted to the method.

In accordance with an aspect of the present disclosure, an electronic device is provided. The electronic device includes an accessory, a display including at least one sensor, and at least one processor. The at least one processor is configured to measure at least one of the following quantities voltage, current, and capacitance, created in response to a touch input applied to the accessory, using the at least one sensor. The at least one processor is further configured to perform a first function if at least one of the following measured quantities: voltage, current, and capacitance, satisfies a first condition, and perform a second function if at least one of the measured quantities satisfies a second condition.

In accordance with another aspect of the present disclosure, an electronic device is provided. The electronic device includes at least one sensor, a display, and at least one processor. The at least one processor is configured to determine whether an accessory is attached to or detached from at least one part of the electronic device, using the at least one sensor, and control the display to operate in a first input mode or a second input mode, in response to an input applied to the display, based on the determination.

In accordance with another aspect of the present disclosure, a method of inputting touches to an electronic device using an elastic accessory detachably attached to at least one part of the electronic device is provided. The method includes determining whether an accessory is detached from or attached to a display of the electronic device, using at least one sensor of the electronic device, operating, if the accessory is detached from the display, the display in a first input mode and receiving touch inputs in the first input mode, and operating, if the accessory is attached to the display, the display in a second input mode and receiving touch inputs in the second input mode.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of the certain embodiments of the present disclosure will be more apparent from the following description taken in conjunction with the accompanying drawings, in which:
FIG. 1 is a diagram showing electronic devices in a network environment according to various embodiments of the present disclosure;
FIG. 2 is a block diagram showing an electronic device according to various embodiments of the present disclosure;
FIG. 3 is a block diagram showing a program module according to various embodiments of the present disclosure;
FIGS. 4A, 4B, and 4C are diagrams showing an accessory, an electronic device and a state when the accessory and the electronic device are combined with each other according to various embodiments of the present disclosure;
FIGS. 5A, 5B, and 5C show diagrams that describe a method of determining a level of pressure with which a user applies a touch input to an accessory according to various embodiments of the present disclosure;
FIGS. 6A and 6B are diagrams showing an electronic device and an accessory coupled to the back of the electronic device according to various embodiments of the present disclosure;
FIGS. 7A, 7B, 7C, and 7D are diagrams showing an electronic device and an accessory coupled to part of the electronic device according to various embodiments of the present disclosure;
FIGS. 8, 9A, 9B, 10, 11, 12A, 12B, and 13 are diagrams showing when an electronic device receives touches via the accessory and performs functions corresponding to the received touches according to various embodiments of the present disclosure;
FIG. 14 is a flowchart that describes a method for an electronic device to receive user inputs according to an embodiment of the present disclosure; and
FIG. 15 is a flowchart that describes a method for an electronic device to receive user inputs according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The expressions, such as "include" and "may include" which may be used in the present disclosure denote the presence of the disclosed functions, operations, and constituent elements and do not limit one or more additional functions, operations, and constituent elements. In an embodiment of the present disclosure, the terms, such as "include" and/or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

Furthermore, in the present disclosure, the expression "and/or" includes any and all combinations of the associated listed words. For example, the expression "A and/or B" may include A, may include B, or may include both A and B.

In an embodiment of the present disclosure, expressions including ordinal numbers, such as "first" and "second," and the like, may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween.

An electronic device according to the present disclosure may be a device including a communication function. For example, the device corresponds to a combination of at least one of a smartphone, a tablet personal computer (PC), a mobile phone, a video phone, an e-book reader, a desktop PC, a laptop PC, a netbook computer, a personal digital assistant (PDA), a portable multimedia player (PMP), a digital audio player, a mobile medical device, an electronic bracelet, an electronic necklace, an electronic accessory, a camera, a wearable device, an electronic clock, a wrist watch, home appliances (for example, an air-conditioner, vacuum, an oven, a microwave, a washing machine, an air cleaner, and the like), an artificial intelligence robot, a television (TV), a digital versatile disc (DVD) player, an audio device, various medical devices (for example, magnetic resonance angiography (MRA), magnetic resonance imaging (MRI), computed tomography (CT), a scanning machine, a ultrasonic wave device, and the like), a navigation device, a global positioning system (GPS) receiver, an event data recorder (EDR), a flight data recorder (FDR), a set-top box, a TV box (for example, Samsung HomeSync™, Apple TV™, or Google TV™), an electronic dictionary, vehicle infotainment device, an electronic equipment for a ship (for example, navigation equipment for a ship, gyrocompass, and the like), avionics, a security device, electronic clothes, an electronic key, a camcorder, game consoles, a head-mounted display (HMD), a flat panel display device, an electronic frame, an electronic album, furniture or a portion of a building/structure that includes a communication function, an electronic board, an electronic signature receiving device, a projector, and the like. It is obvious to those skilled in the art that the electronic device according to the present disclosure is not limited to the aforementioned devices.

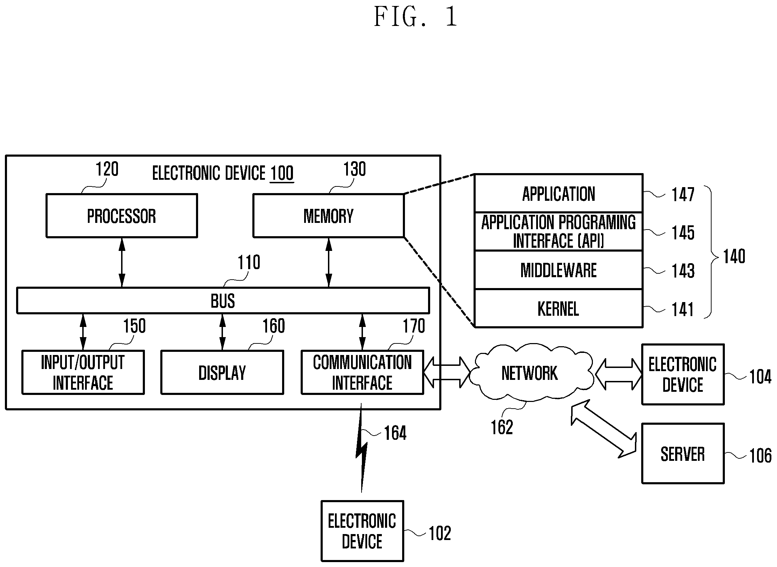

FIG. 1 is a block diagram showing electronic devices in a network environment according to various embodiments of the present disclosure.

Referring to FIG. 1, an electronic device 100 may include a bus 110, a processor 120, a memory 130, an input/output interface 150, a display 160, a communication interface 170, and other similar and/or suitable components.

The bus 110 may be a circuit which interconnects the above-described elements and delivers a communication (e.g., a control message) between the above-described elements.

The processor 120 may receive commands from the above-described other elements (e.g., the memory 130, the input/output interface 150, the display 160, the communication 170, and the like) through the bus 110, may interpret the received commands, and may execute calculation or data processing according to the interpreted commands. Although illustrated as one element, the processor 120 may include multiple processors without departing from the teachings herein.

The memory 130 may store commands or data received from the processor 120 or other elements (e.g., the input/output interface 150, the display 160, the communication interface 170, and the like) or generated by the processor 120 or the other elements. The memory 130 may include programming modules, such as a kernel 141, middleware 143, an application programming interface (API) 145, an application 147, and the like. Each of the above-described programming modules may be implemented in software, firmware, hardware, or a combination of two or more thereof.

The kernel 141 may control or manage system resources (e.g., the bus 110, the processor 120, the memory 130, and the like) used to execute operations or functions implemented by other programming modules (e.g., the middleware 143, the API 145, and the application 147). In addition, the kernel 141 may provide an interface capable of accessing and controlling or managing the individual elements of the electronic device 100 by using the middleware 143, the API 145, or the application 147.

The middleware 143 may serve to go between the API 145 or the application 147 and the kernel 141 in such a manner that the API 145 or the application 147 communicates with the kernel 141 and exchanges data therewith. In addition, in relation to work requests received from one or more applications 140 and/or the middleware 143, for example, may perform load balancing of the work requests by using a method of assigning a priority, in which system resources (e.g., the bus 110, the processor 120, the memory 130, and the like) of the electronic device 100 can be used, to at least one of the one or more applications 140.

The API 145 is an interface through which the application 147 is capable of controlling a function provided by the kernel 141 or the middleware 143, and may include, for example, at least one interface or function for file control, window control, image processing, character control, and the like.

The input/output interface 150, for example, may receive a command or data as input from a user, and may deliver the received command or data to the processor 120 or the memory 130 through the bus 110. The display 160 may display a video, an image, data, and the like, to the user.

The communication interface 170 may connect communication between electronic devices 102 and 104 and the electronic device 100. The communication interface 170 may support a short-range communication protocol 164 (e.g., Wi-Fi, Bluetooth (BT), and near field communication (NFC)), or a network communication 162 (e.g., the internet, a local area network (LAN), a wide area network (WAN), a telecommunication network, a cellular network, a satellite network, a plain old telephone service (POTS), and the like). Each of the electronic devices 102 and 104 may be a device which is identical (e.g., of an identical type) to or different (e.g., of a different type) from the electronic device 100. Further, the communication interface 170 may connect communication between a server 106 and the electronic device 100 via the network 162.

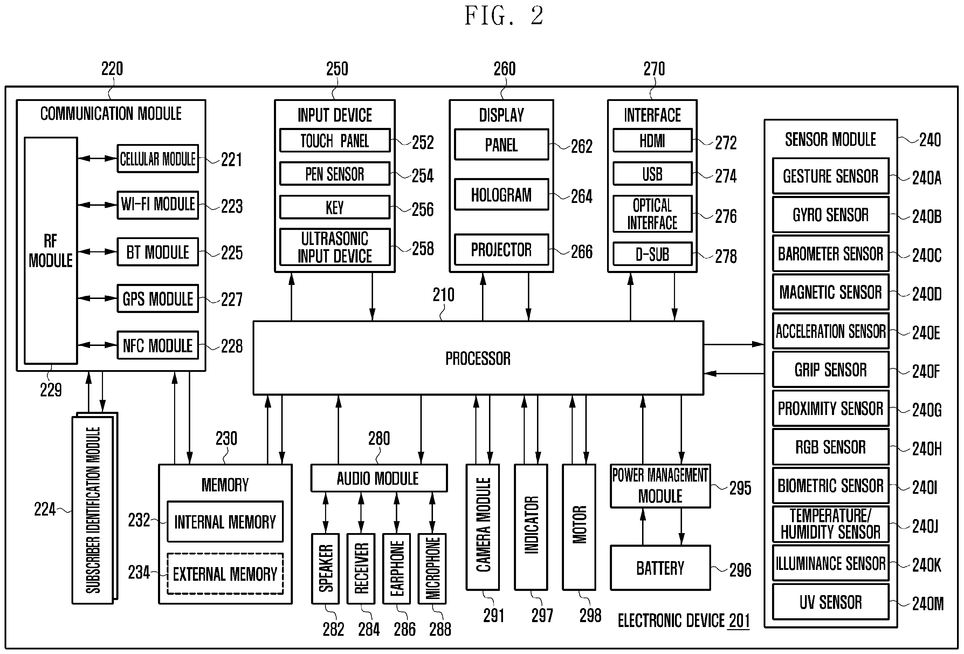

FIG. 2 is a block diagram showing an electronic device according to various embodiments of the present disclosure.

Referring to FIG. 2, an electronic device 201 may be, for example, the electronic device 100 illustrated in FIG. 1.

Referring to FIG. 2, the electronic device 201 may include a processor 210, a subscriber identification module (SIM) card 224, a memory 230, a communication module 220, a sensor module 240, an input device 250, a display 260, an interface 270, an audio module (coder/decoder (codec)) 280, a camera module 291, a power management module 295, a battery 296, an indicator 297, a motor 298 and any other similar and/or suitable components.

The processor 210 may include one or more application processors (APs) (not illustrated), or one or more communication processors (CPs) (not illustrated). The processor 210 may be, for example, the processor 120 illustrated in FIG. 1. The AP and the CP may be included in the processor 210 in FIG. 2, or may be included in different integrated circuit (IC) packages, respectively. According to an embodiment of the present disclosure, the AP and the CP may be included in one IC package.

The AP may execute an operating system (OS) or an application program, and thereby may control multiple hardware or software elements connected to the AP and may perform processing of and arithmetic operations on various data including multimedia data. The AP may be implemented by, for example, a system on chip (SoC). According to an embodiment of the present disclosure, the processor 210 may further include a graphical processing unit (GPU) (not illustrated).

The CP may manage a data line and may convert a communication protocol in the case of communication between the electronic device (e.g., the electronic device 100) including the electronic device 201 and different electronic devices connected to the electronic device through the network. The CP may be implemented by, for example, an SoC. According to an embodiment of the present disclosure, the CP may perform at least some of multimedia control functions. The CP, for example, may distinguish and authenticate a terminal in a communication network by using a SIM (e.g., the SIM card 224). In addition, the CP may provide the user with services, such as a voice telephony call, a video telephony call, a text message, packet data, and the like.

Further, the CP may control the transmission and reception of data by the communication module 220. In FIG. 2, the elements, such as the power management module 295, the memory 230, and the like are illustrated as elements separate from the processor 210. However, according to an embodiment of the present disclosure, the processor 210 may include at least some of the above-described elements (e.g., the power management module 295).

According to an embodiment of the present disclosure, the AP or the CP may load, to a volatile memory, a command or data received from at least one of a non-volatile memory and other elements connected to each of the AP and the CP, and may process the loaded command or data. In addition, the AP or the CP may store, in a non-volatile memory, data received from or generated by at least one of the other elements.

The SIM card 224 may be a card implementing a SIM, and may be inserted into a slot formed in a particular portion of the electronic device 201. The SIM card 224 may include unique identification information (e.g., IC card identifier (ICCID)) or subscriber information (e.g., international mobile subscriber identity (IMSI)).

The memory 230 may include an internal memory 232 and an external memory 234. The memory 230 may be, for example, the memory 130 illustrated in FIG. 1. The internal memory 232 may include, for example, at least one of a volatile memory (e.g., a dynamic random access memory (DRAM), a static RAM (SRAM), a synchronous dynamic RAM (SDRAM), and the like), and a non-volatile memory (e.g., a one time programmable read only memory (OTPROM), a programmable ROM (PROM), an erasable and programmable ROM (EPROM), an electrically erasable and programmable ROM (EEPROM), a mask ROM, a flash ROM, a not AND (NAND) flash memory, a not OR (NOR) flash memory, and the like). According to an embodiment of the present disclosure, the internal memory 232 may be in the form of a solid state drive (SSD). The external memory 234 may further include a flash drive, for example, a compact flash (CF), a secure digital (SD), a micro-SD, a mini-SD, an extreme digital (xD), a memory stick, and the like.

The communication module 220 may include a radio frequency (RF) module 229. The communication module 220 may be, for example, the communication interface 170 illustrated in FIG. 1. The communication module 220 may further include wireless communication modules to enable wireless communication through the RF module 229. The wireless communication modules may include, for example, a cellular module 221, a Wi-Fi module 223, a BT module 225, a GPS module 227, or a NFC module 228. Additionally or alternatively, the wireless communication modules may further include a network interface (e.g., a LAN card), a modulator/demodulator (modem), and the like for connecting the electronic device 201 to a network (e.g., the internet, a LAN, a WAN, a telecommunication network, a cellular network, a satellite network, a POTS, and the like) (not illustrated).

The communication module 220 (e.g., the communication interface 170) may perform data communication with other electronic devices (e.g., the electronic devices 102 and 104, and the server 106) through a network (e.g., network 162).

The RF module 229 may be used for transmission and reception of data, for example, transmission and reception of RF signals or called electronic signals. Although not illustrated, the RF unit 229 may include, for example, a transceiver, a power amplifier module (PAM), a frequency filter, a low noise amplifier (LNA), and the like. In addition, the RF module 229 may further include a component for transmitting and receiving electromagnetic waves in a free space in a wireless communication, for example, a conductor, a conductive wire, and the like.

The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a red, green and blue (RGB) sensor 240H, a biometric sensor 240I, a temperature/humidity sensor 240J, an illuminance sensor 240K, and an ultra violet (UV) sensor 240M. The sensor module 240 may measure a physical quantity or may detect an operating state of the electronic device 201, and may convert the measured or detected information to an electrical signal. Additionally/alternatively, the sensor module 240 may include, for example, an electronic nose (E-nose) sensor (not illustrated), an electromyography (EMG) sensor (not illustrated), an electroencephalogram (EEG) sensor (not illustrated), an electrocardiogram (ECG) sensor (not illustrated), a fingerprint sensor (not illustrated), and the like. Additionally or alternatively, the sensor module 240 may include, for example, an E-nose sensor (not illustrated), an EMG sensor (not illustrated), an EEG sensor (not illustrated), an ECG sensor (not illustrated), a fingerprint sensor, and the like. The sensor module 240 may further include a control circuit (not illustrated) for controlling one or more sensors included therein. The sensor module 240 may also, or in the alternative, be controlled by the processor 210.

The input device 250 may include a touch panel 252, a pen sensor 254 (e.g., a digital pen sensor), keys 256, and an ultrasonic input device 258. The input device 250 may be, for example, the input/output interface 150 illustrated in FIG. 1. The touch panel 252 may recognize a touch input in at least one of, for example, a capacitive scheme, a resistive scheme, an infrared scheme, and an acoustic wave scheme. In addition, the touch panel 252 may further include a controller (not illustrated). In the capacitive type, the touch panel 252 is capable of recognizing proximity as well as a direct touch. The touch panel 252 may further include a tactile layer (not illustrated). In this event, the touch panel 252 may provide a tactile response to the user.

The pen sensor 254 (e.g., a digital pen sensor), for example, may be implemented by using a method identical or similar to a method of receiving a touch input from the user, or by using a separate sheet for recognition. For example, a key pad or a touch key may be used as the keys 256. The ultrasonic input device 258 enables the terminal to detect a sound wave by using a microphone (e.g., a microphone 288) of the terminal through a pen generating an ultrasonic signal, and to identify data. The ultrasonic input device 258 is capable of wireless recognition. According to an embodiment of the present disclosure, the electronic device 201 may receive a user input from an external device (e.g., a network, a computer, or a server), which is connected to the electronic device 201, through the communication module 220.

The display 260 may include a panel 262, a hologram 264, and a projector 266. The display 260 may be, for example, the display 160 illustrated in FIG. 1. The panel 262 may be, for example, a liquid crystal display (LCD) and an active matrix organic light emitting diode (AM-OLED) display, and the like. The panel 262 may be implemented so as to be, for example, flexible, transparent, or wearable. The panel 262 may include the touch panel 252 and one module. The hologram 264 may display a three-dimensional image in the air by using interference of light. The projector 266 may include light-projecting elements, such as LEDs, to project light into external surfaces. According to an embodiment of the present disclosure, the display 260 may further include a control circuit for controlling the panel 262, the hologram 264, or the projector 266.

The interface 270 may include, for example, a high-definition multimedia interface (HDMI) 272, a universal serial bus (USB) 274, an optical interface 276, and a d-subminiature (D-sub) 278. Additionally or alternatively, the interface 270 may include, for example, SD/multi-media card (MMC) (not illustrated) or infrared data association (IrDA) (not illustrated).

The audio module (codec) 280 may bidirectionally convert between a voice and an electrical signal. The audio module 280 may convert voice information, which is input to or output from the audio module 280, through, for example, a speaker 282, a receiver 284, an earphone 286, the microphone 288, and the like.

The camera module 291 may capture an image and a moving image. According to an embodiment of the present disclosure, the camera module 291 may include one or more image sensors (e.g., a front lens or a back lens), an image signal processor (ISP) (not illustrated), and a flash LED (not illustrated).

The power management module 295 may manage power of the electronic device 201. Although not illustrated, the power management module 295 may include, for example, a power management IC (PMIC), a charger IC, or a battery fuel gauge.

The PMIC may be mounted to, for example, an IC or an SoC semiconductor. Charging methods may be classified into a wired charging method and a wireless charging method. The charger IC may charge a battery, and may prevent an overvoltage or an overcurrent from a charger to the battery. According to an embodiment of the present disclosure, the charger IC may include a charger IC for at least one of the wired charging method and the wireless charging method. Examples of the wireless charging method may include a magnetic resonance method, a magnetic induction method, an electromagnetic method, and the like. Additional circuits (e.g., a coil loop, a resonance circuit, a rectifier, and the like) for wireless charging may be added in order to perform the wireless charging.

The battery fuel gauge may measure, for example, a residual quantity of the battery 296, or a voltage, a current or a temperature during the charging. The battery 296 may supply power by generating electricity, and may be, for example, a rechargeable battery.

The indicator 297 may indicate particular states of the electronic device 201 or a part of the electronic device 201 (e.g., the AP), for example, a booting state, a message state, a charging state and the like. The motor 298 may convert an electrical signal into a mechanical vibration.

Although not illustrated, the electronic device 201 may include a processing unit (e.g., a GPU) for supporting a module TV. The processing unit for supporting a module TV may process media data according to standards, such as, for example, digital multimedia broadcasting (DMB), digital video broadcasting (DVB), media flow, and the like. Each of the above-described elements of the electronic device 201 according to an embodiment of the present disclosure may include one or more components, and the name of the relevant element may change depending on the type of electronic device. The electronic device 201 according to an embodiment of the present disclosure may include at least one of the above-described elements. Some of the above-described elements may be omitted from the electronic device 201, or electronic device 201 may further include additional elements. In addition, some of the elements of the electronic device 201 according to an embodiment of the present disclosure may be combined into one entity, which may perform functions identical to those of the relevant elements before the combination.

The term "module" used in the present disclosure may refer to, for example, a unit including one or more combinations of hardware, software, and firmware. The "module" may be interchangeable with a term, such as "unit," "logic," "logical block," "component," "circuit," and the like. The "module" may be a minimum unit of a component formed as one body or a part thereof. The "module" may be a minimum unit for performing one or more functions or a part thereof. The "module" may be implemented mechanically or electronically. For example, the "module" according to an embodiment of the present disclosure may include at least one of an application-specific integrated circuit (ASIC) chip, a field-programmable gate array (FPGA), and a programmable-logic device for performing certain operations which have been known or are to be developed in the future.

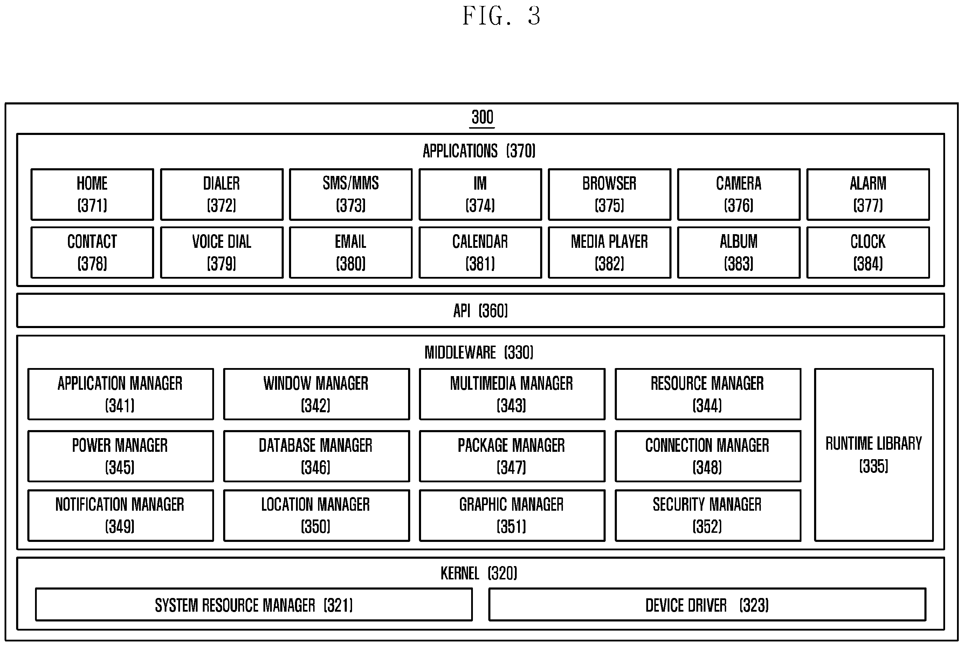

FIG. 3 is a block diagram illustrating a configuration of a programming module according to an embodiment of the present disclosure.

Referring to FIG. 3, a programming module 300 may be included (or stored) in the electronic device 100 (e.g., the memory 130) or may be included (or stored) in the electronic device 201 (e.g., the memory 230) illustrated in FIG. 1. At least a part of the programming module 300 may be implemented in software, firmware, hardware, or a combination of two or more thereof. The programming module 300 may be implemented in hardware (e.g., the electronic device 201), and may include an OS controlling resources related to an electronic device (e.g., the electronic device 100) and/or various applications (e.g., an application 370) executed in the OS. For example, the OS may be Android, iOS, Windows, Symbian, Tizen, Bada, and the like.

Referring to FIG. 3, the programming module 300 may include a kernel 320, a middleware 330, an API 360, and/or the application 370.

The kernel 320 (e.g., the kernel 141) may include a system resource manager 321 and/or a device driver 323. The system resource manager 321 may include, for example, a process manager (not illustrated), a memory manager (not illustrated), and a file system manager (not illustrated). The system resource manager 321 may perform the control, allocation, recovery, and the like of system resources. The device driver 323 may include, for example, a display driver (not illustrated), a camera driver (not illustrated), a BT driver (not illustrated), a shared memory driver (not illustrated), a USB driver (not illustrated), a keypad driver (not illustrated), a Wi-Fi driver (not illustrated), and/or an audio driver (not illustrated). In addition, according to an embodiment of the present disclosure, the device driver 323 may include an inter-process communication (IPC) driver (not illustrated).

The middleware 330 may include multiple modules previously implemented so as to provide a function used in common by the applications 370. In addition, the middleware 330 may provide a function to the applications 370 through the API 360 in order to enable the applications 370 to efficiently use limited system resources within the electronic device. For example, as illustrated in FIG. 3, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include, for example, a library module used by a complier, in order to add a new function by using a programming language during the execution of the application 370. According to an embodiment of the present disclosure, the runtime library 335 may perform functions which are related to input and output, the management of a memory, an arithmetic function, and the like.

The application manager 341 may manage, for example, a life cycle of at least one of the applications 370. The window manager 342 may manage graphical user interface (GUI) resources used on the screen. The multimedia manager 343 may detect a format used to reproduce various media files and may encode or decode a media file through a codec appropriate for the relevant format. The resource manager 344 may manage resources, such as a source code, a memory, a storage space, and the like of at least one of the applications 370.

The power manager 345 may operate together with a basic input/output system (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity, such as, for example, Wi-Fi and BT. The notification manager 349 may display or report, to the user, an event, such as an arrival message, an appointment, a proximity alarm, and the like in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security, user authentication, and the like. According to an embodiment of the present disclosure, when the electronic device (e.g., the electronic device 100) has a telephone function, the middleware 330 may further include a telephony manager (not illustrated) for managing a voice telephony call function and/or a video telephony call function of the electronic device.

The middleware 330 may generate and use a new middleware module through various functional combinations of the above-described internal element modules. The middleware 330 may provide modules specialized according to types of OSs in order to provide differentiated functions. In addition, the middleware 330 may dynamically delete some of the existing elements, or may add new elements. Accordingly, the middleware 330 may omit some of the elements described in the various embodiments of the present disclosure, may further include other elements, or may replace the some of the elements with elements, each of which performs a similar function and has a different name.

The API 360 (e.g., the API 145) is a set of API programming functions, and may be provided with a different configuration according to an OS. In the case of Android or iOS, for example, one API set may be provided to each platform. In the case of Tizen, for example, two or more API sets may be provided to each platform.

The applications 370 (e.g., the applications 147) may include, for example, a preloaded application and/or a third party application. The applications 370 may include, for example, a home application 371, a dialer application 372, a short message service (SMS)/multimedia message service (MMS) application 373, an instant message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 300 may be implemented by instructions stored in a non-transitory computer-readable storage medium. When the instructions are executed by one or more processors (e.g., the processor 210), the one or more processors may perform functions corresponding to the instructions. The non-transitory computer-readable storage medium may be, for example, the memory 230. At least a part of the programming module 300 may be implemented (e.g., executed) by, for example, the processor 210. At least a part of the programming module 300 may include, for example, a module, a program, a routine, a set of instructions, and/or a process for performing one or more functions.

Names of the elements of the programming module (e.g., the programming module 300) according to an embodiment of the present disclosure may change depending on the type of OS. The programming module according to an embodiment of the present disclosure may include one or more of the above-described elements. Alternatively, some of the above-described elements may be omitted from the programming module. Alternatively, the programming module may further include additional elements. The operations performed by the programming module or other elements according to an embodiment of the present disclosure may be processed in a sequential method, a parallel method, a repetitive method, or a heuristic method. In addition, some of the operations may be omitted, or other operations may be added to the operations.

With reference to FIG. 2, electronic devices according to various embodiments of the present disclosure are described in detail as follows.

An electronic device according to an embodiment of the present disclosure is capable of including an accessory, a processor 120, and a display 160.

In the embodiment, the term 'accessory' is referred as a unit, a member, a device, etc. which can be detachably attached to the electronic device.

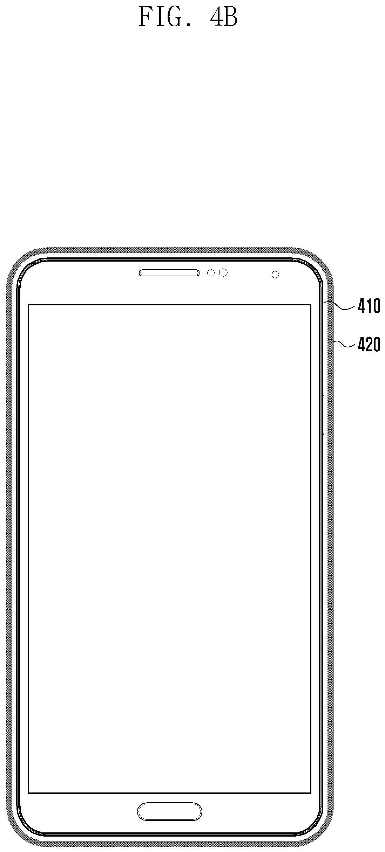

In particular, the accessory may be made of an elastic material. If the accessory receives a touch input via an input device, e.g., a user's finger, a stylus pen, it is deformed in such a way that at least part of the body changes in thickness because its material has elasticity. The accessory will be described in detail later with reference to FIG. 4B.

The display 160 is capable of including one or more sensors.

The sensor is capable of measuring one or more of the following quantities voltage, current, and capacitance, created according to user inputs.

The processor 120 obtains at least one of the following measured quantities voltage, current, and capacitance. If the processor 120 ascertains that at least one of the following measured quantities voltage, current, and capacitance satisfies a first condition, it performs a first function.

If the processor 120 ascertains that at least one of the following measured quantities voltage, current, and capacitance satisfies a second condition, it performs a second function.

That is, the processor 120 is capable of performing a first or second function based on the voltage, current, and capacitance.

The first and second conditions may be referred to as conditions related to at least one of the following quantities voltage, current, and capacitance. For example, the voltage corresponding to a second condition may be set to a value less than that corresponding to a first condition. The first and second conditions may be set according to a user's settings.

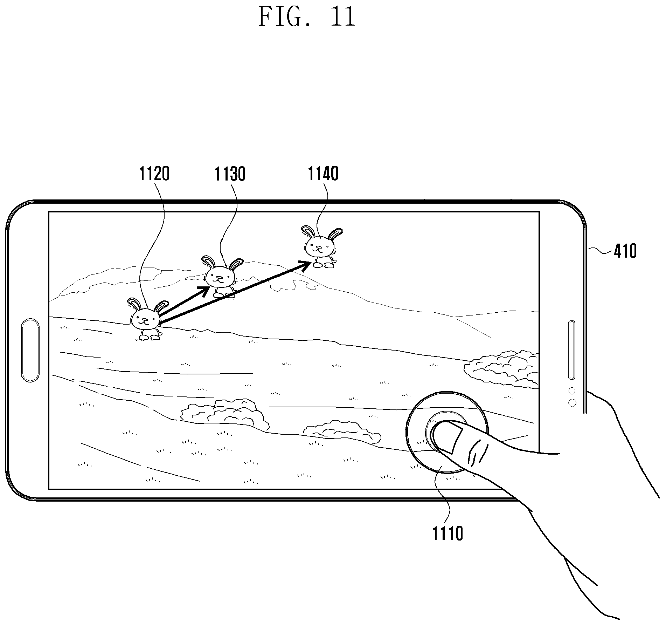

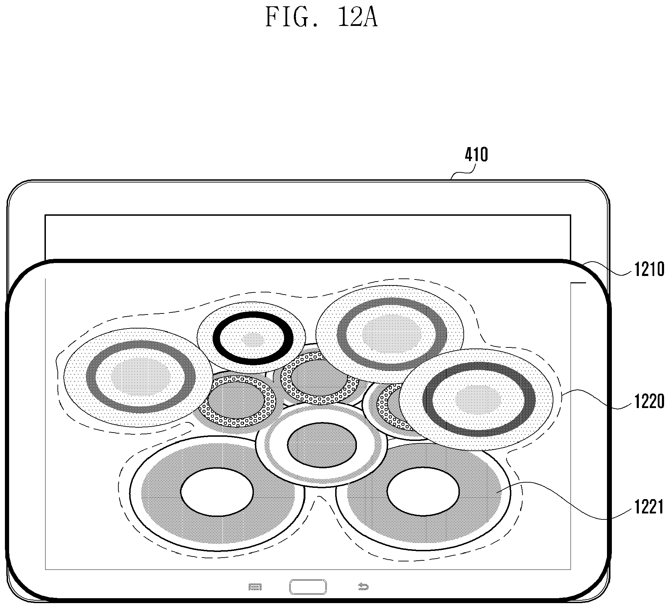

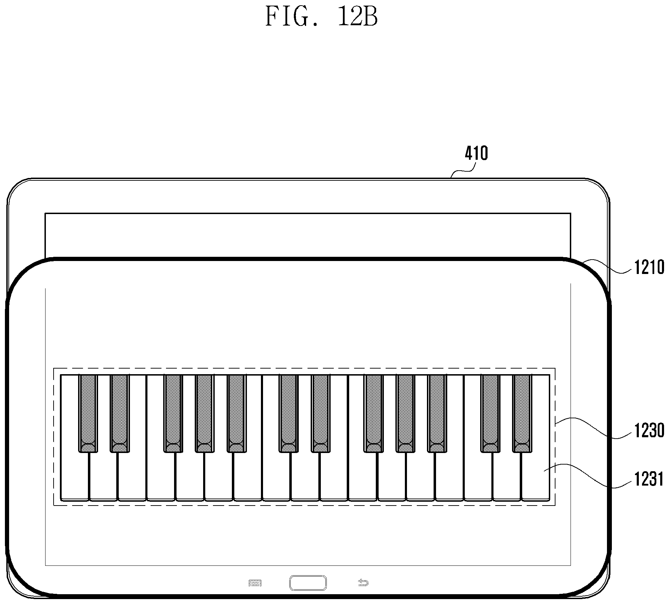

The first and second functions are referred to as various functions which can be executed by applications. That is, if the processor 120 ascertains that at least one of the following quantities voltage, current, and capacitance corresponds to a first or second condition, it is capable of executing a function corresponding to the first condition or a function corresponding to the second condition. This will be described, in detail, later, with reference to FIGS. 11 and 12.

Although the embodiment is described in such a way as to perform functions using two conditions, i.e., first and second conditions, it should be understood that the present disclosure is not limited by the number of conditions. For example, it may be modified in such a way that the processor 120 sets a number of conditions and determines whether it satisfies a specified one of a number of conditions measured via sensors. If the processor 120 satisfies a specified condition, it may perform a function corresponding to the specified condition.

In another embodiment, the electronic device is capable of including an accessory, at least one sensor, a processor 120 and a display 160.

The sensor is capable of detecting whether the accessory is in a detached state or an attached state. The sensor may be a magnetic sensor capable of measuring magnetic fields corresponding to a detached state or an attached state of the accessory; and ascertaining that the accessory is in a detached state or an attached state. It should be understood that the sensor may also be implemented with other types of sensors if they can detect whether that accessory is in an attached/detached state, e.g., an optical sensor, an infra-red sensor, etc. If the sensor of an electronic device is implemented with an infra-red sensor and the electronic device user is calling while he/she holds the electronic device up to his/her ear, it is capable of measuring a distance between the user's ear and the electronic device and detecting whether the accessory is in a detached/attached state. It should also be understood that the sensor is not limited in installation location.

The processor 120 is capable of controlling the electronic device to operate in a first or second input mode, based on the determination as to whether the accessory is in a detached/attached state. For example, the processor 120 is capable of controlling the electronic device to operate in a first input mode if the accessory is in a detached state; or in a second input mode if the accessory is in an attached state.

The first input mode includes an input mode where a touch is applied, with contact, to the display. The second input mode includes an input mode where a proximity touch is applied, without contact, to the display.

That is, the first input mode may be referred to as all modes where touches are applied, with contact, to the display, while using the electronic device. For example, if the processor 120 controls the electronic device to execute a first input mode, the electronic device user directly contacts the display with the finger (fingers) in order to use the electronic device.

The second input mode may be referred to as all modes where inputs are applied, without contact, to the display, whiling using the electronic device. For example, if the processor 120 controls the electronic device to execute a second input mode, the electronic device user applies proximity touches to the display, without contact, with a separate input device, such as the finger (fingers), a stylus pen, etc., in order to use the electronic device. For example, the separate input device may be a pen with coils for electromagnetic induction of magnetic fields output from a touch panel. Alternatively, the second input mode may be a hovering touch mode using the electromagnetic induction of magnetic fields output from a display.

If the processor 120 activates the second input mode, it is capable of obtaining coordinates of a separate input device on the display, based on the quality of voltage, current, or capacitance, caused by the electromagnetic induction generated as the separate input device approaches the display. The processor 120 is also capable of obtaining a distance between the input device and the display, based on the change of the voltage, current, and capacitance.

If the processor 120 activates the second input mode, it is capable of determining the variation of thickness at part of the accessory to which a touch input is applied.

More specifically, if a touch input is applied with pressure to an accessory, the distance between the accessory and the display 160 may vary depending on the change in pressure. For example, if the level of pressure applied to the accessory increases, the distance between the accessory and the display 160 may decrease. In contrast, if the level of pressure applied to the accessory decreases, the distance between the accessory and the display 160 may increase. The change in distance between the accessory and the display 160 leads to change at least one of the following quantities voltage, current, and capacitance. In this case, the processor 120 is capable of measuring the variation of thickness at least part of the accessory, to which the touch input is applied, based on at least one of the following quantities voltage, current, and capacitance.

The electronic device may further include a memory that stores information mapping levels of pressure of a touch input applied to an accessory to at least one of the quantities, voltage, current, and capacitance. The electronic device is capable of extracting a level of pressure corresponding to at least one of the following measured quantities, voltage, current, and capacitance, by referring to the mapping information.

The processor 120 is capable of controlling the output of the second input mode, with different magnitudes, according to the extracted level of pressure. For example, if a level of pressure of a touch input is greater than a preset value, the processor 120 may control the electronic device to output a maximum magnitude of vibration. Alternatively, if a level of pressure of a touch input is greater than a preset value, the processor 120 may control the electronic device not to output sound.

The processor 120 is capable of controlling the output of the second input mode, with different magnitudes, using both the extracted level of pressure and the coordinates of a touch input on the display. For example, if a level of pressure of a touch input is greater than a preset value and coordinates of a touch input on the display correspond to an area for adjusting the volume up, the processor 120 may control the electronic device to output a maximum level of volume. Alternatively, if a level of pressure of a touch input is greater than a preset value and coordinates of a touch input on the display correspond to an area for adjusting the volume down, the processor 120 may control the electronic device to mute output sound. In addition, if a level of pressure of a touch input is greater than a preset value and coordinates of a touch input on the display correspond to an area for executing an application, the processor 120 may control the electronic device to perform a function that the user set via the application.

That is, the processor 120 is capable of controlling an application in different manners corresponding levels of a user's touch input applied to the accessory, in the second input mode. Therefore, the processor 120 is capable of implementing pressure detection in displays that do not support a pressure detection function.

The processor 120 is capable of determining whether a specified application is activated, and controlling the electronic device to operate in a first or second input mode based on the determination result. For example, if a game application is specified, the processor 120 may control, when the game application is executed, the electronic device to operation in a second input mode.

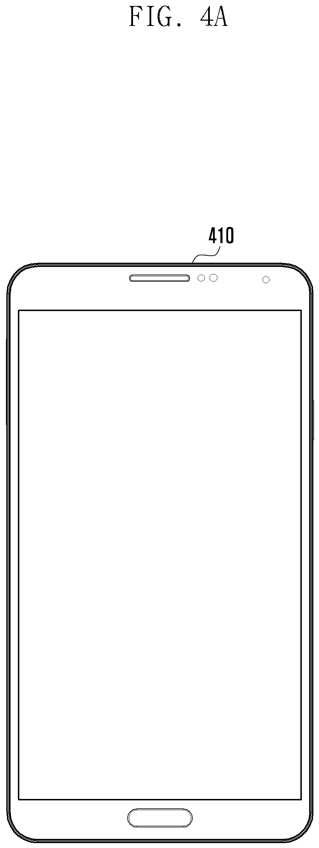

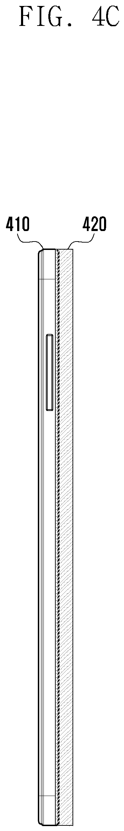

FIGS. 4A, 4B, and 4C are diagrams showing an accessory, an electronic device, and a state when the accessory and the electronic device are combined with each other according to various embodiments of the present disclosure.

FIG. 4A is a diagram showing an electronic device 410, and FIGS. 4B and 4B are diagrams showing the electronic device 410 with an accessory 420.

The accessory 420 is made of an elastic material. The accessory 420 may vary in shape according to levels of pressure with which a user's touch input is applied. The accessory 420 may restore its original shape after a user's touch input is ended.

The accessory 420 is not limited in material. The accessory 420 may be made of an elastic material, e.g., plastic, rubber, synthetic resin, etc.

Although the embodiment shown in FIGS. 4A, 4B, and 4C is implemented in such a way that the accessory 420 covers most of the electronic device 410, it should be understood that the accessory 420 is not limited in size or shape. For example, the accessory 420 may be formed in shape so that it is combined with part of the electronic device 410, e.g., the top portion of the display, the bottom portion of the display, both the opposite ends of the display if the display is curved, etc. If the electronic device is designed to be equipped with a curved-display, there may be a risk that the curved portion is broken. In this case, when the electronic device with the curved-display is combined with the accessory 420, it can reduce a risk of breakage in the curved-display and can also achieve various effects according to the present disclosure. The electronic device 410 is not limited in number of accessories 420 that may be attached at one time. For example, the electronic device 410 may be combined with multiple accessories 420.

FIG. 4C shows a side-view of the electronic device 410 combined with the accessory 420.

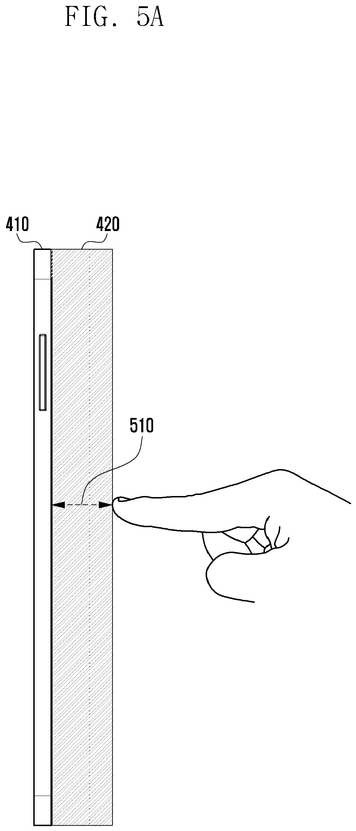

FIGS. 5A to 5C show diagrams that describe a method of determining a level of pressure with which a user applies a touch input to an accessory according to various embodiments of the present disclosure.

When a user applies a touch input to an accessory, a distance between the accessory and a display of the electronic device may vary. If the distance between the accessory and a display of the electronic device varies, at least one of the following quantities voltage, current, and capacitance, generated according to the touch input, may also vary. The electronic device determines a level of pressure of the touch input, based on at least one of the following quantities voltage, current, and capacitance, referring to mapping information.

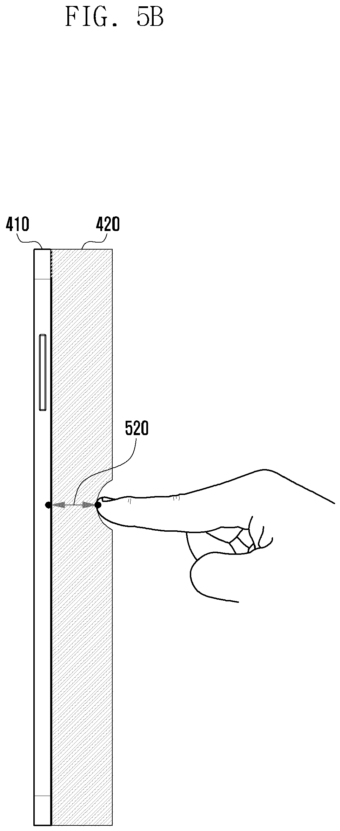

If a user applies an input with pressure to the accessory 420, a distance 520 (shown in FIG. 5B) between the accessory 420 and the surface of the electronic device 410 decreases to a length that is smaller than the distance 510 (shown in FIG. 5A) between the accessory 420 and the surface of the electronic device 410 before applying a user's input with pressure to the accessory 420.

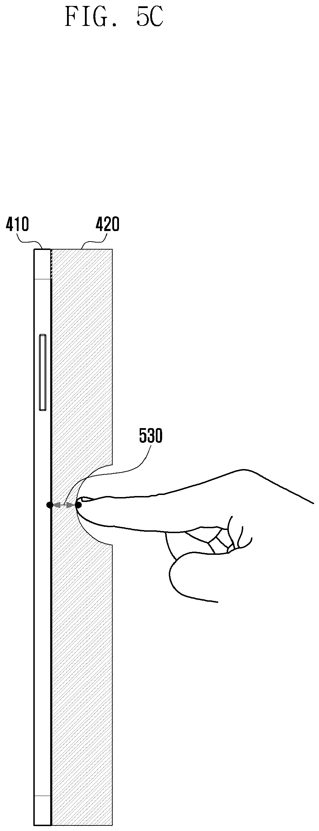

With reference to FIG. 5C, if a user applies an input with pressure whose level is greater than that of pressure (shown in FIG. 5B) to the accessory 420, a distance 530 (shown in FIG. 5C) between the accessory 420 and the surface of the electronic device 410 decreases to a length that is smaller than the distance 520 (shown in FIG. 5B) between the accessory 420 and the surface of the electronic device 410.

That is, the distance 510 may vary according to a level of pressure with which the user applies an input to the accessory 420. The change of the distance 510 may lead to change at least one of the following quantities voltage, current, and capacitance.

In various embodiments of the present disclosure, the processor 120 of the electronic device 410 is capable of calculating a level of pressure with which the user applies a touch input to the accessory 420, based on at least one of the following quantities voltage, current, and capacitance, created corresponding to the change of the distance 510, and the mapping information; and controlling the application based on the level of pressure. That is, the electronic device according to various embodiments of the present disclosure is capable of enabling touch panels, which do not support a pressure detection function for a user's touch input, to detect pressure of a user's touch input.

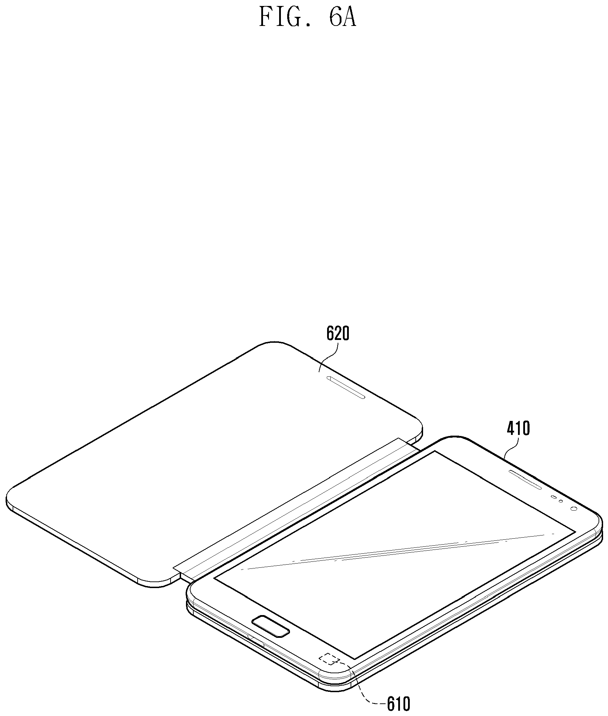

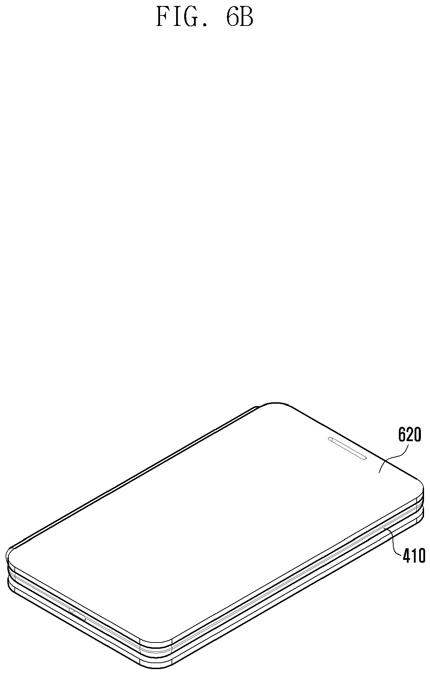

FIGS. 6A and 6B are diagrams showing an electronic device and an accessory coupled to the back of the electronic device according to various embodiments of the present disclosure.

FIG. 6A shows a diagram when an accessory 620 coupled to the back of an electronic device is open (which is called a detached state).

FIG. 6B shows a diagram when an accessory 620 coupled to the back of an electronic device is closed (which is called an attached state).

The processor 120 is capable of determining whether the accessory 620 is in a detached or attached state, using a sensor. If the accessory 620 is in a detached state, the processor 120 is capable of controlling the electronic device to operate in a first input mode. If the accessory 620 is in an attached state, the processor 120 is capable of controlling the electronic device to operate in a second input mode.

In the embodiment, the processor 120 is capable of determining whether the accessory 620 is in a detached or attached state, using a sensor 610 of the electronic device 410. Although the embodiment shown in FIG. 6A is implemented in such a way that the sensor 610 is located at the bottom of the electronic device 410, it should be understood that the present disclosure is not limited by the installation location of the sensor 610. For example, the sensor 610 may be built in the speaker of the electronic device 410. In various embodiments, the sensor 610 may include a magnetic sensor for measuring and detecting magnetic fields between the electronic device 410 and the accessory 620. The electronic device 410 is capable of determining whether the accessory 620 is in a detached or attached state, based on a magnetic field measured and detected by the magnetic sensor.

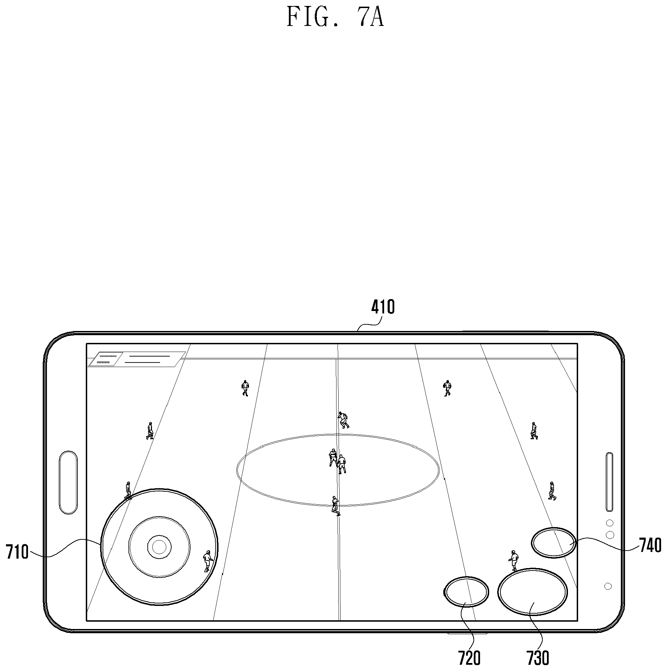

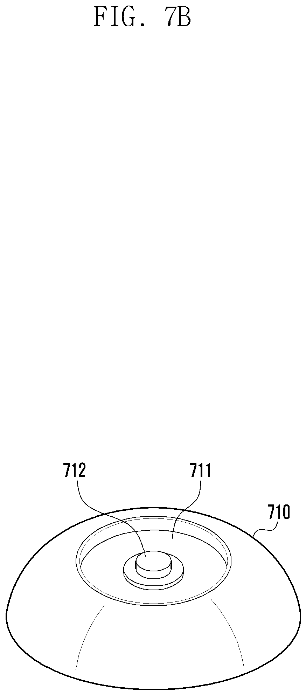

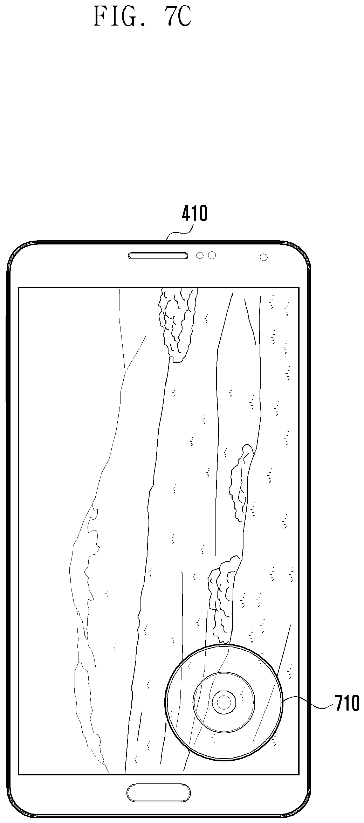

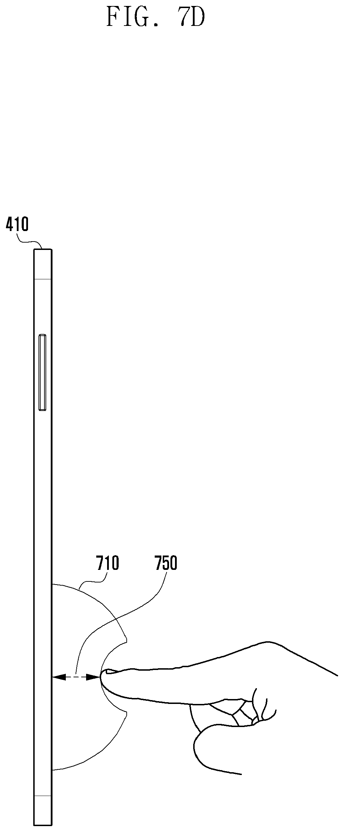

FIGS. 7A, 7B, 7C, and 7D are diagrams showing an electronic device and an accessory coupled to part of the electronic device according to various embodiments of the present disclosure.

Referring to FIG. 7A, accessories 710, 720, 730, and 740 may be attached to parts of the electronic device 410, respectively. That is, the electronic device 410 is not limited in number of accessories to be attached.

Referring to FIG. 7B, the accessory 710 is designed in such a way that the middle portion 711 is depressed; and the center portion 712 protrudes from the middle portion 711. It should, however, be understood that the accessory 710 is not limited to the shape shown in FIG. 7B. The accessory 710 may also be designed in various forms.

Referring to FIG. 7C, the accessory 710 may be attached to part of the electronic device 410, instead of the entire body of the electronic device 410. Referring to FIG. 7D, when the accessory 710 is attached to part of the electronic device 410 and receives a user's touch input, the distance 750 between the accessory 710 and the electronic device 410 varies according to a level of pressure of the touch input. In this case, the processor of the electronic device 410 is capable of determining a level of pressure of the user's touch input, based on at least one of the following quantities voltage, current, and capacitance, generated according to the change in the distance 750, and the mapping information; and controlling an application based on the determined level of pressure. The processor is also capable of obtaining coordinates of the user's touch input on the display; and controlling an application, using the coordinates and/or a level of pressure of the user's touch input.

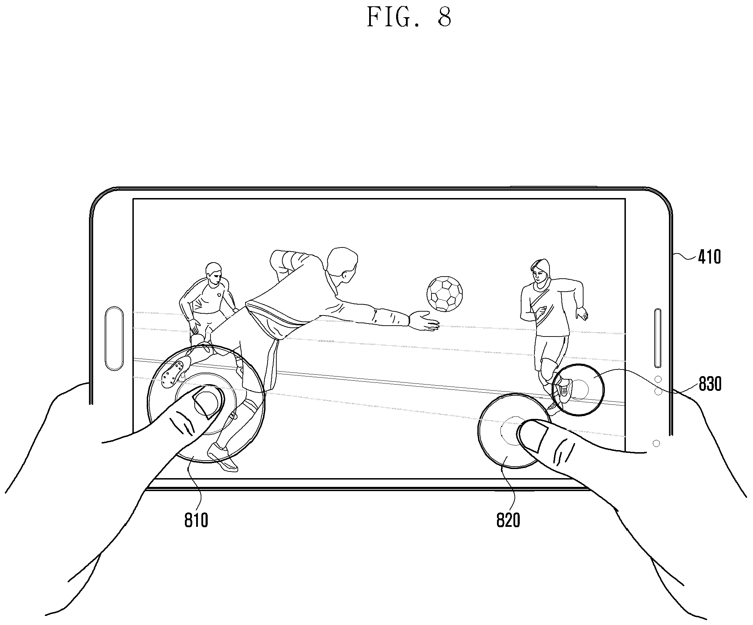

FIGS. 8, 9A, 9B, 10, 11, 12A, 12B, and 13 are diagrams showing when an electronic device receives touches via the accessory and performs functions corresponding to the received touches according to various embodiments of the present disclosure.

With reference to FIG. 8, a soccer game application is running on an electronic device 410, and three accessories 810, 820, are 830 are attached to parts of the electronic device 410, respectively.

When the accessory 810 receives a user's touch input, a distance between the accessory 810 and the electronic device 410 varies according to the user's touch input. The change of the distance leads to change at least one of the following quantities voltage, current, and capacitance. In this case, the processor of the electronic device is capable of controlling the speed of the dribble of a soccer player in the soccer game application, based on the location of the display. Therefore, the user may control the speed of the dribble of a player, according to a level of pressure with which the user applies a touch input to the accessory.

The accessories 820 and 830 also operate in the same way as the accessory 810. In particular, the processor is capable of controlling operations that differ from each other, based on the location of the display. For example, the processor is capable of controlling the shooting motion of a soccer player, based on the location corresponding to the accessory 820. The processor is also capable of controlling the passing motion of a soccer player, based on the location corresponding to the accessory 830.

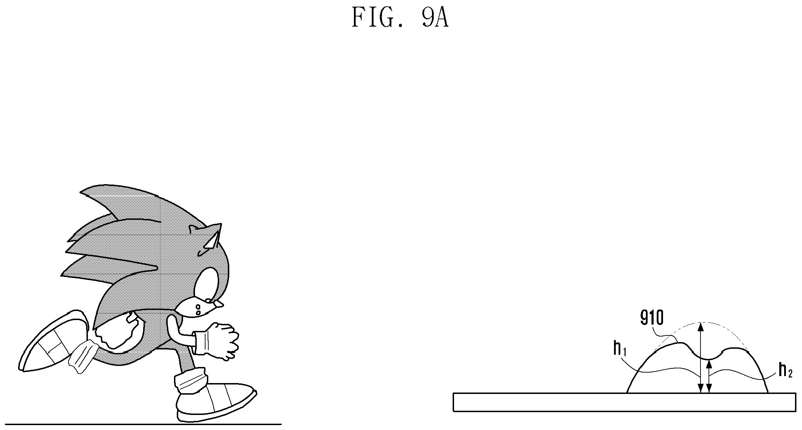

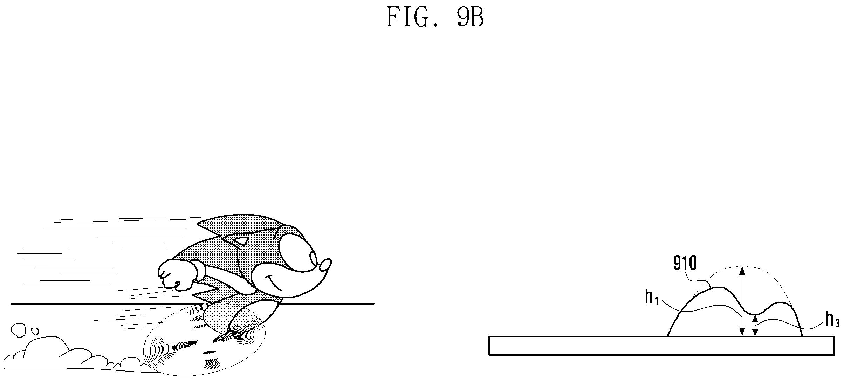

FIGS. 9A and 9B are diagrams showing that an accessory varies in shape according to levels of pressure of a user's touch input. If an electronic device and an accessory 910 is spaced apart from a distance, h1, before a user applies a touch input to the accessory 910, the distance h1 is decreased to distances, h2 and h3, as the user applies a touch input to the accessory 910, with varying the level of pressure, as shown in FIGS. 9A and 9B, respectively.

The distance h3 between the accessory 910 and the electronic device, as shown in FIG. 9B, is less than the distance h2 between the accessory 910 and the electronic device, as shown in FIG. 9A. The processor is capable of detecting that a level of pressure of a user's touch input shown in FIG. 9B is greater than that of a user's touch input shown in FIG. 9A, based on at least one of the following quantities current, and capacitance and the mapping information, it is capable of controlling the application based on the detected levels of pressure. For example, if the processor detects a relatively small level of pressure, it is capable of controlling the character to walk slow as shown in FIG. 9A. If the processor detects a relatively large level of pressure, it is capable of controlling the character to run fast as shown in FIG. 9B.

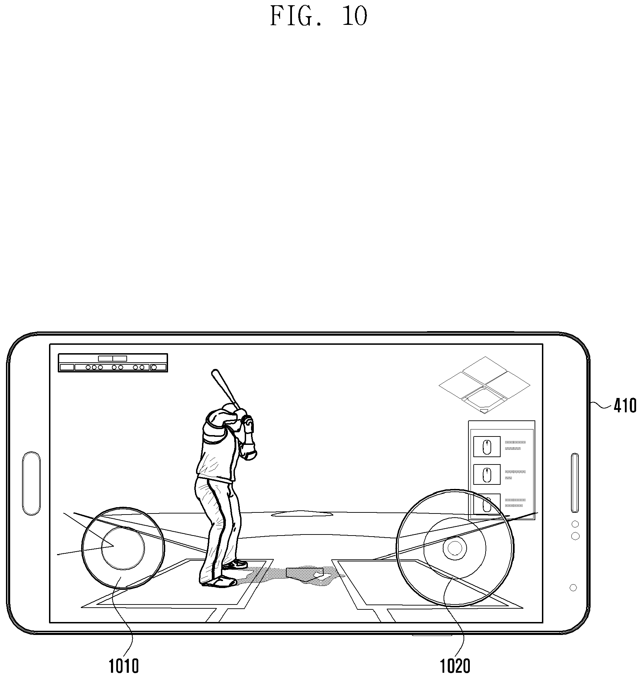

Referring to FIG. 10, a baseball game application is running on an electronic device 410, and two accessories 1010 and 1020 are attached to parts of the electronic device 410, respectively.

When the user applies a touch input to the accessory 1010 and a distance between the accessory 1010 and the electronic device 410 varies, the processor of the electronic device is capable of controlling the baseball game application, based on coordinates of the accessories 1010 and 1020 on the display, at least one of the following quantities, voltage, current, and capacitance, generated according to the change of the distance between the accessories and the electronic device, and mapping information.

Referring to FIG. 11, a game application related to a rabbit is running on an electronic device 410, and an accessory 1110 is attached to part of the electronic device 410.

The processor of the electronic device is capable of controlling the jump height of a rabbit 1120 in the game application, based on coordinates of the accessory 1110 on the display, at least one of the following quantities, voltage, current, and capacitance, generated according to a user's touch input, and mapping information.

The processor is capable of measuring at least one of the following quantities, voltage, current, and capacitance, generated according to a user's touch input applied to the accessory 1110. If at least one of the measured quantities, voltage, current, and capacitance satisfied a first condition, the processor is capable of controlling the rabbit 1120 to jump up to a height 1130 corresponding to the first condition. If at least one of the measured quantities, voltage, current, and capacitance satisfied a second condition, the processor is capable of controlling the rabbit 1120 to jump up to a height 1140 corresponding to the second condition.

Referring to FIGS. 12A and 12B, an application for playing musical instruments is running on an electronic device 410, and one accessory 1210 is attached to part of the electronic device 410.

FIG. 12A is a diagram showing a user interface (UI) 1220 for the drum kit on the display of the electronic device.

The drum kit UI 1220 may also be displayed on part of the display area, to which the accessory 1210 is attached.

The processor is capable of detecting a touch input applied to part 1221 of the accessory area, corresponding to a specified one of a number of drums in the drum kit UI 1220; and measuring at least one of the quantities, voltage, current, and capacitance, generated according to the touch input.

If at least one of the measured quantities, voltage, current, and capacitance satisfied a first condition, the processor is capable of performing a first function corresponding to the first condition. For example, if the first function is a function for outputting the drum sound via the application for playing musical instruments, the processor is capable of producing the drum sounds according to a user's touch inputs.

If at least one of the measured quantities, voltage, current, and capacitance satisfied a second condition, the processor is capable of performing a second function corresponding to the second condition. For example, if the second function is a function for outputting the drum sound via the application for playing musical instruments and the volume level of the second function is set to be a value higher than that of the first function, the processor is capable of producing the drum sounds louder than that of the first function, according to a user's touch inputs.

That is, the magnitude of at least one of the quantities, voltage, current, and capacitance varies depending on the strength of a user's touch input applied to the accessory, and the processor is capable of controlling functions that differ from each other, corresponding to the magnitudes of at least one of the measured, voltage, current, and capacitance.

FIG. 12B is a diagram showing a UI 1230 for a musical keyboard on the display of the electronic device.

A UI 1230 for a musical keyboard, e.g., a piano keyboard, is displayed on part of the display area, to which the accessory 1210 is attached.

The processor is capable of detecting a touch input applied to part 1231 of the accessory area, corresponding to a specified one of a number of keys in the piano keyboard UI 1230; and measuring at least one of the quantities, voltage, current, and capacitance, generated according to the touch input.

After measuring at least one of the quantities, voltage, current, and capacitance, generated according to the touch input applied to part 1231 of the accessory, if the processor ascertains that the measured quantity satisfies a specified one of a number of conditions, it is capable of performing a function corresponding to the specified condition, i.e., producing a piano sound. For example, the processor is capable of producing a piano sound according to a first touch input applied to part 1231 of the accessory. The processor is also capable of producing a piano sound according to a second touch input that the user more strongly applies to part 1231 of the accessory than the first touch input. In this case, the processor is capable of producing the piano sound according to the second touch input louder than that of the first touch input.

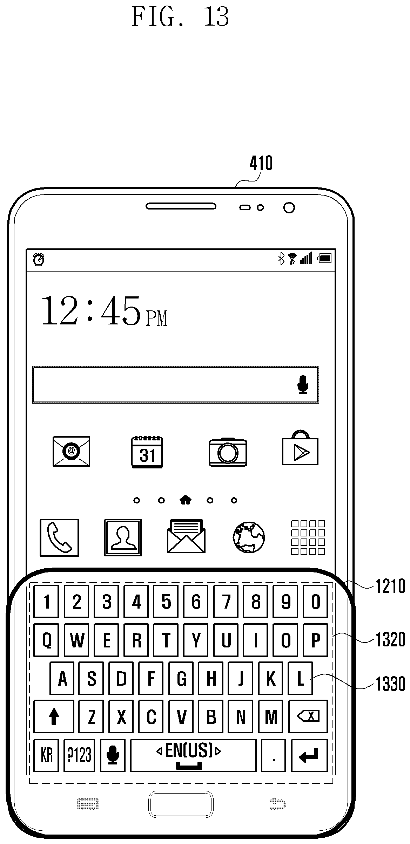

FIG. 13 is a diagram showing a UI 1320 for a keyboard on the display of the electronic device.

A UI 1320 for a keyboard is displayed on part of the display area, to which the accessory 1210 is attached.

The processor is capable of detecting a touch input applied to part 1330 of the accessory area, corresponding to a specified one of a number of keys in the keyboard UI 1320; and measuring at least one of the quantities, voltage, current, and capacitance, generated according to the touch input.

If at least one of the measured quantities, voltage, current, and capacitance, generated according to the touch input applied to part 1330 of the accessory area, satisfied a specified one of a number conditions, the processor is capable of performing a function corresponding to the specified condition, i.e., receiving a character/letter corresponding to the key. For example, the processor is capable of receiving a character/letter according to a first touch input applied to part 1330 of the accessory. The processor is also capable of receiving a character/letter according to a second touch input that the user more strongly applies to part 1330 of the accessory than the first touch input. The character/letter received via the second touch input may be a character/letter related to the character/letter received via the first touch input. For example, if the processor has received a lower-case letter, a, via the first touch input, it is capable of controlling the input to receive an upper-case letter, A, related to the lower-case letter a.

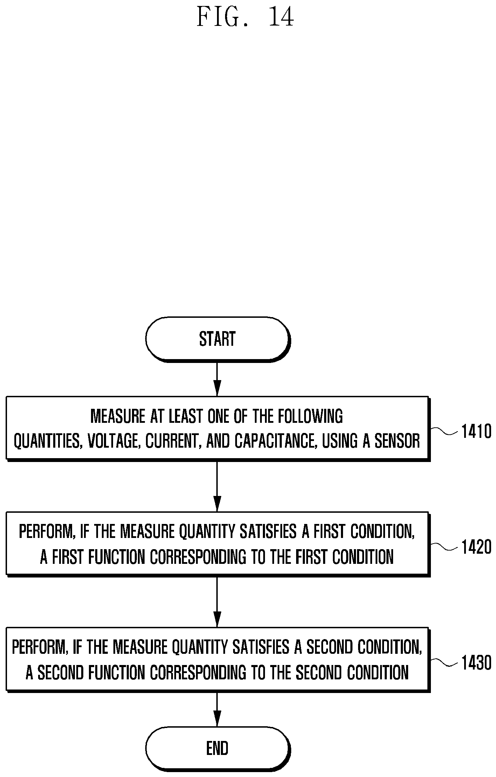

FIG. 14 is a flowchart that describes a method for an electronic device to receive user inputs using an accessory according to an embodiment of the present disclosure.

Referring to FIG. 14, the electronic device (e.g., processor 120) is capable of measuring at least one of the following quantities, voltage, current, and capacitance, generated according to a touch input applied to an accessory, using at least one sensor in operation 1410.

If the electronic device (e.g., processor 120) ascertains that at least one of the measured quantities: voltage, current, and capacitance satisfies a first condition, it is capable of performing a first function corresponding to the first condition in operation 1420.

If the electronic device (e.g., processor 120) ascertains that at least one of the measured quantities: voltage, current, and capacitance satisfies a second condition, it is capable of performing a second function corresponding to the second condition in operation 1430.

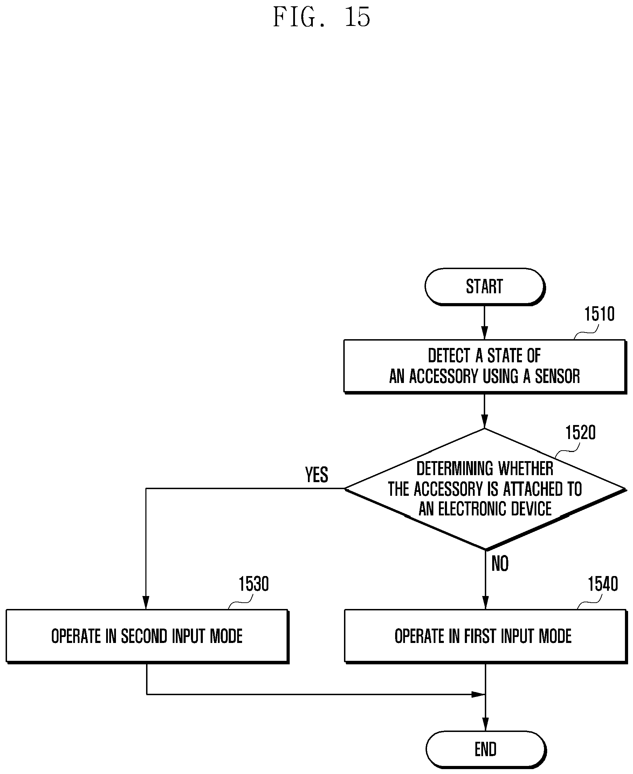

FIG. 15 is a flowchart that describes a method for an electronic device to receive user inputs according to an embodiment of the present disclosure.

Referring to FIG. 15, the electronic device (e.g., processor 120) is capable of determining whether an accessory is detached from or attached to the electronic device, using at least one sensor in operation 1510.

If the electronic device (e.g., processor 120) ascertains that an accessory is attached to the electronic device (operation 1520, YES option), it operates in a second input mode and receives touch inputs in the second input mode in operation 1530.

On the other hand, if the electronic device (e.g., processor 120) ascertains that an accessory is detached from the electronic device (operation 1520, NO option), it operations in a first input mode and receives touch inputs in the first input mode in operation 1540.

The input methods of the embodiments with reference to FIGS. 14 and 15 differ from each other as follows. The input method of the embodiment with reference to FIG. 14 measures at least one of the following quantities, voltage, current, and capacitance, generated according to a touch input applied to an accessory, using at least one sensor included in the display. The input method of the embodiment with reference to FIG. 15 measures at least one of the following quantities, voltage, current, and capacitance, generated according to a touch input applied to an accessory, using at least one sensor capable of detecting whether the accessory is in a detached or attached state.

However, it should be understood that the method for the electronic device to receive user inputs using an accessory according to various embodiments of the present disclosure may employ a sensor for the embodiment shown in FIG. 14 and a sensor for the embodiment shown in FIG. 15.

The method of receiving user input and the electronic device adapted to the method according to various embodiments of the present disclosure are capable of detecting touches using an accessory made of an elastic material and performing functions corresponding to the touches, thereby providing users with realistic operation.

The method of receiving user input and the electronic device adapted to the method are also capable of implementing pressure detection in electronic devices without a pressure sensing function.

In various embodiments of the present disclosure, a computer-readable recoding medium storing commands is implemented in such a way that commands enable at least one processor to perform at least one of the following determining whether an accessory is attached to or detached from a display, using at least one sensor; operating, if the accessory is detached from the display, the display in a first input mode to receive touch inputs in the first input mode; and operating, if the accessory is attached to the display, the display in a second input mode to receive touch inputs in the second input mode.

The above-discussed method is described herein with reference to flowchart illustrations of user interfaces, methods, and computer program products according to embodiments of the present disclosure. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that are executed on the computer or other programmable apparatus provide operations for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a ROM, a RAM, compact disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
at least one sensor;
a display; and
at least one processor electrically connected to the at least one sensor, and the display,
wherein the at least one processor is configured to:
determine whether an accessory is attached to or detached from at least one part of the electronic device, using the at least one sensor, and
control the display to operate in a first input mode or a second input mode, in response to an input applied to the display, based on the determination.

2. The electronic device of claim 1, wherein the at least one processor is further configured to:
control the display to operate in the first input mode if the accessory is detached from the at least one part of the electronic device, and
control the display to operate in the second input mode if the accessory is attached to the at least one part of the electronic device.

3. The electronic device of claim 1,
wherein the first input mode comprises an input mode where a physical touch is applied, with contact, to the display, and
wherein the second input mode comprises an input mode where a proximity touch is applied, without contact, to the display.

4. The electronic device of claim 1,
wherein the at least one processor is further configured to detect at least one of the following quantities: voltage, current, and capacitance, corresponding to the input, and determine a level of pressure of a touch input applied to the accessory, and
wherein the level of pressure is determined based on at least one of the detected quantities.

5. The electronic device of claim 4, further comprising:
a memory storing information mapping at least one level of pressure of the touch input to at least one of the following quantities: voltage, current, and capacitance.

6. The electronic device of claim 5, wherein the at least one processor is further configured to determine a level of pressure of the touch input, based on the mapping information and the at least one of the measured quantities, which varies according to the change in thickness of at least part of the accessory, corresponding to the touch input.

7. The electronic device of claim 6, wherein the at least one processor is further configured to control an application based on the level of pressure.

8. A method of inputting a touch to an electronic device, using an elastic accessory detachably attached to at least one part of the electronic device, the method comprising:
determining whether an accessory is detached from or attached to a display of the electronic device, using at least one sensor of the electronic device;
if the accessory is detached from the display, operating the display in a first input mode and receiving touch inputs in the first input mode; and
if the accessory is attached to the display, operating the display in a second input mode and receiving touch inputs in the second input mode.

9. The method of claim 8,
wherein the first input mode comprises an input mode where a physical touch is applied, with contact, to the display, and
wherein the second input mode comprises an input mode where a proximity touch is applied, without contact, to the display.

10. The method of claim 8, wherein operating the display in a second input mode comprises determining a level of the pressure applied to the display, based on information mapping levels of pressure applied to the accessory to at least one of the following quantities: voltage, current, and capacitance, corresponding to the input.

11. The method of claim 10, wherein the determining of the level of the pressure comprises determining a level of pressure of the touch input, based on the mapping information and at least one of the quantities, which varies according to the change in thickness of at least part of the accessory, corresponding to the touch input.

12. The method of claim 11, wherein operating the display in a second input mode comprises controlling an application based on the level of pressure.

13. The method of claim 8, wherein determining a level of the pressure applied to the display comprises:
generating a magnetic field;
detecting an electromagnetic induction based on the generated magnetic field; and
determine the at least one of the quantities based on the detected electromagnetic induction.

14. The method of claim 13, wherein the generated magnetic field corresponds to an input device providing the proximity touch.
